(19) **Europäisches Patentamt European Patent Office Office européen des brevets**

(11) **EP 2 474 170 B1**

(12) **EUROPEAN PATENT SPECIFICATION**

(45) Date of publication and mention of the grant of the patent:
**31.05.2017 Bulletin 2017/22**

(21) Application number: **09782555.8**

(22) Date of filing: **03.09.2009**

(51) Int Cl.:
**H04R 3/00** *(2006.01)*

(86) International application number:
**PCT/EP2009/061395**

(87) International publication number:
**WO 2011/026518 (10.03.2011 Gazette 2011/10)**

(54) **DELAY UNIT FOR A CONFERENCE AUDIO SYSTEM, METHOD FOR DELAYING AUDIO INPUT SIGNALS, COMPUTER PROGRAM AND CONFERENCE AUDIO SYSTEM**

VERZÖGERUNGSEINHEIT FÜR EIN KONFERENZAUDIOSYSTEM, VERFAHREN ZUM VERZÖGERN VON AUDIOEINGANGSSIGNALEN, COMPUTERPROGRAMM UND KONFERENZAUDIOSYSTEM

UNITÉ DE RETARD POUR UN SYSTÈME DE CONFÉRENCE AUDIO, PROCÉDÉ DE RETARD DE SIGNAUX D'ENTRÉE AUDIO, PROGRAMME D'ORDINATEUR ET SYSTÈME DE CONFÉRENCE AUDIO

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.07.2012 Bulletin 2012/28**

(73) Proprietor: **Robert Bosch GmbH 70442 Stuttgart (DE)**

(72) Inventors:
• **SMAAK, Marc**
  **NL-4614 JR Bergen op Zoom (NL)**
• **JANSE, C.P.**
  **NL-5616 BM Eindhoven (NL)**
• **TCHANG, Chen**
  **NL-4854 GR Bavel (NL)**
• **VAN STUIVENBERG, L.C.A.**
  **NL-5704 DN Helmond (NL)**

(56) References cited:
  **EP-A1- 1 962 547     US-B1- 6 275 899**

## Description

State of the art

The invention relates to a delay unit allocated to a single delegate unit of a conference audio system adapted to delay audio input signals for an adjustable time delay, thereby generating audio output signals.

More specifically, the invention relates to a delay unit allocated to a single delegate unit of a conference audio system adapted to delay audio input signals for an adjustable time delay, thereby generating audio output signals, the delay unit comprising a circular buffer, a write pointer to write a sample of a first audio input signal to the circular buffer at a first write position, a read pointer to read a sample from the circular buffer at a first read position as a sample of a first output signal, whereby the distance between the first write position and the first read position determines a first time delay, and a buffer control module adapted to move the write pointer to the next position after writing and to move the read pointer to a next position after reading. The invention also relates to a method for delaying audio input signals, a respective computer program and a conference audio system comprising the delay unit.

Commonly known conference audio systems - also called sound reinforcement systems - comprise a central control unit and a plurality of so-called delegate units, which represent the working place of the delegates and have a microphone for inputting audio signals in the conference audio system and a loudspeaker for outputting audio signals. Such a conference audio system is for example disclosed in EP 1 686 835 A1. In operation, a speaker uses one of the microphones and the microphone signal is sent to the central control unit.

Optionally the signal is processed by the central control unit (like feedback suppression) and then distributed as a plurality of signals to the other delegate units. In these delegate units the signals are passed to the loudspeakers as audio output signals, except for the delegate units where there is an active speaker in front of the delegate unit. For these delegate units the loudspeaker signal is attenuated or is blocked to avoid howling.

Document US6275899) is related to a method and circuit for implementing digital delay lines using delay caches in a network. Document EP 1962547A1 discloses a teleconference device comprising a plurality of microphones and a plurality of loudspeakers in one single box. In order to provide position information the audio signals of the plurality of loudspeakers are delayed individually.

Summary of the invention

According to the invention, a conference audio system with the features of claim 1, a method for delaying input signals with the features of claim 7 and a computer program with the features of claim 8 are proposed. Preferred or advantageous embodiments of the invention are disclosed by the dependent claims, the description and the figures as attached.

It is one observation in connection with the invention that in the case of known conference audio systems, all delegate loudspeakers reproduce an output audio signal of the active speaker simultaneously. In a small room it appears to be still possible to localize the person currently speaking, because there is - besides the audio signals emitted by the delegated loudspeakers - also a direct acoustical path from the speaker's mouth to the listener. In a larger room, however, the listener can be further away from the speaker. In this case it can be nearly impossible to localize the position of the speaker and thus any directivity of the audio atmosphere is lost. Another problem is that it is difficult to distinguish two speakers, again because the sound does not have (different) directions.

It was realized that adding a time delay to each individual delegate loudspeaker, whereby the delay time being individually dependent on the distance between the individual delegate loudspeaker being supported by the audio output signal from the active delegate microphone, allows to add directivity to the audio atmosphere. The length of the time delay is preferably chosen in accordance with the "Haas effect". The Haas effect is also called the precedence effect and describes the human psychoacoustic phenomena of correctly identifying the direction of the sound source heard in both ears. Due to the head's geometry (two ears spaced apart, separated by a barrier) the direct sound from any source first enters the ear closest to the source, then the ear farthest away. The Haas effect describes that humans localize a sound source based upon the first arriving sound, if the subsequent arise within 25 - 35 ms delay. If the later arrivals are longer than this time delay, then two distinct sounds are heard.

Before this technical background a conference audio system according to claim 1 with a delay unit allocated to a single delegate unit of a conference audio system is proposed, which is adapted to delay audio input signals for an adjustable time delay, thereby generating audio output signals. The delay unit or units in the conference audio system is/are allocated to the individual delegate units, so that each delegate unit is provided with audio output signals with an individual time delay. Especially it is possible, that each individual time delay differs from the other. The audio input signals are preferably provided by a microphone or another sound source, the audio output signals are intended to be output by the loudspeakers.

The delay unit comprises at least a circular buffer, which is defined by a logical memory architecture, whereby specific storage locations are used in an endless, ring-like manner. A write pointer is provided to write a sample, for example a time piece, of a first input signal to the circular buffer at a first write position, a read pointer is provided to read a sample from the circular buffer at a first read position as a sample of a first output signal. The distance between the first write position and the first read position, which is the number of storage locations, each storage location being able to store a sample of the audio input signal, determines or represents a first time delay. The time delay can be calculated by multiplying the number of storage locations with the temporal length of the sample.

Furthermore, a buffer control module is integrated, which is operable to move the write pointer to a next, especially following position after writing and to move the read pointer to a next, especially following position after reading. Especially a FIFO - first in first out - architecture is provided by the circular buffer and the buffer control module.

According to the invention it is proposed that the buffer control module is adapted to adjust or set a second time delay by moving the write pointer to a second write position, whereby the distance between the first read position and the second write position determines the second time delay. In one embodiment it is possible, that the second write position is in the said circular buffer. In another embodiment, a second circular buffer is provided and the write pointer is set to the second write position in the second circular buffer. Additionally the read pointer may be set to the first read position in the second circular buffer. As a result, two write pointer and two read pointer are used in connection with two circular buffers during the change of the audio signals.

It was found that switching from a first audio input signal with a first time delay to a second audio input signal with a second time delay causes disturbances or noise due to the jump of the time delays. In other words, each change of a speaker requiring a change in the time delay results in a disturbance or noise caused by the jump in time delays.

Thus it is an advantage of the invention, that due to the proposed control of the write pointer these disturbances can be minimized or eliminated at all. It is especially proposed that the buffer control module is operable to change the time delay during or in connection with a change of the audio input signal source. Keeping in mind, that the length of the time delay is dependent on the distance and/or orientation of a sound source and the respective delegate unit, it is normally necessary to change the time delay as soon as the sound source and thus the distance and orientation changes.

It is especially preferred that the second write position is determined by the rule:

$$\text{first read position} + \text{second delay time} = \text{second write position}$$

During change of the time delay three different situations can be discussed:

First time delay = Second time delay
In this situation the second write position is equal to the first write position and the write pointer does not change its place. As a result, the remaining samples of the first audio input signal will be rendered followed by the samples of the second audio input signal.

First time delay > Second time delay
The write pointer is readjusted, i.e. is put back and the samples of the second audio input signal are added to the samples of the first audio input signal at same memory locations. As a result all samples of the first audio input signal are output to the loudspeaker, partly overlapped by the samples of the second audio input signal.

First time delay < Second time delay
The write pointer is readjusted, i.e. it is put forward, so that a number of memory locations are not filled by samples of the first audio input signal and the second audio input signal. In order to avoid random noise it is preferred that each memory location which is read out by the read pointer is afterwards set to zero, so that in this situation the samples of the first audio input signal will be rendered, followed by a number of zeros and then by the samples of the second audio input signal.

In yet a further development of the invention it is proposed to fade out the first output signal and/or to fade in the second audio signal. This development supports the aim of the invention to smooth the output audio signal. To avoid noise, especially clicks, it is proposed to apply for example a weighting function to the first and/or second input (or output) audio signal as soon as there is a change in the audio input source. For example the first B new samples of the second input or output audio signal can be weighted with a weight

$$w_i = \frac{i+1}{B},$$

with i the (new) sample number ranging from 0 to (B-1). Likewise the last remaining samples of the first input/output audio signal can be weighted with for example

$$w_j = \frac{j+1}{MIN(B, d_{old})},$$

where j is ranging from 0 to MIN(B,$d_{old}$), where j=0 corresponds to the last received sample and j=B to the last but B samples. In case the delay $d_{old}$ is smaller than B then only the last $d_{old}$ samples can and should be sampled. In other embodiments other fade-in and/or fade-out algorithms are possible.

In yet a further development of the invention the delay unit comprises a control module, which is adapted to store a lookup table or a map of possible audio sources and respective time delays or an equivalent data, so that the delay unit is capable to find the individual time delay for a specific audio source.

A further subject-matter of the invention relates to a method for delaying output input signals, which is preferably carried out by the delay unit as already described or according to one of the preceding claims.

As already explained, a sample of a first audio input signal is written by a write pointer to a circular buffer at a first write position and a sample of the first audio input signal is read by a read pointer from the circular buffer at a first read position, whereby the distance between the first write position and the first read position determines the first time delay. The write and read operations are performed in an endless manner, so that after writing the sample the write pointer is moved to a next position determined by (old position +1) mod N, whereby N is the length of the circular buffer. In a similar way the read pointer is moved to the next position which is determined by (old position +1) mod N after reading.

During a change from the first audio input signal with the first time delay to a second audio input signal with the second time delay the write pointer is set to a second write position, whereby the distance between the first read position and the second write position determines the second time delay.

A further subject-matter of the invention relates to a computer program with the features of claim 8.

The subject-matter of the invention is a conference audio system - also called a sound reinforcement system with the features of claim 1. As according to the invention the conference audio system adds directivity to the output audio signals the system may also be called direction faithful sound (DFS) reinforcement system. The conference audio system comprises a plurality of delegate units, each delegate unit having a delegate loudspeaker and/or a delegate microphone. As a fact it is possible that a delegate unit has both or has only a loudspeaker or a microphone.

A control means is employed for distributing at least one audio input signal from at least one of the delegate microphones or another sound source to a plurality of the delegate loudspeakers, whereby the plurality of delegate loudspeakers generate a common audio atmosphere.

In order to employ the Haas-effect as explained before delay means are provided, which are operable to add a time delay on the audio input signal.

According to the invention the delay means are the delay unit or a plurality of such delay units according to one of the preceding claims 1 to 6 or as previously described. Preferably, the delay unit is positioned in the delegate units, in other embodiments it is also possible to centralize all or a part of the delay units for example in the control means and send the delayed audio input signals as audio output signals to the loudspeakers.

Preferably, the time delay is dependent on the distance and/or direction between the position of the delegate microphone or sound source, respectively, generating the audio input signal and the individual delegate loudspeaker position. Especially each delay unit or at least the plurality of the delegate units have an individual time delay, which is different to the time delay of the adjacent and/or nearby delegate units.

Short description of the figures

Further features, effects and advantages of the invention are disclosed by the following description of a preferred embodiment of the invention and the figures as attached. The figures show:

Fig. 1 a schematic view of a congress audio system as a first embodiment of the invention;

Fig. 2 a block diagram of a first possible realization of the congress audio system in Fig. 1;

Description of preferred embodiments of the invention

In the figures similar or like parts are denoted with similar or like reference numbers.

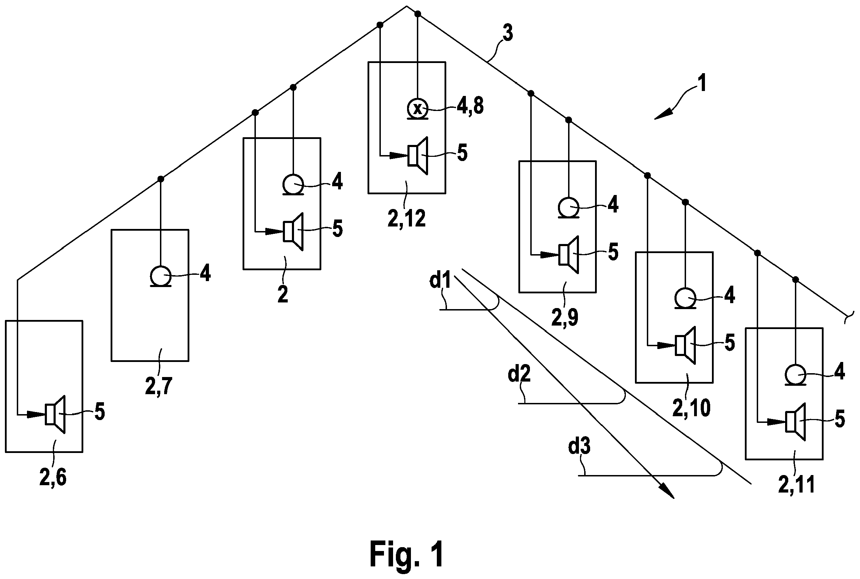

Fig. 1 shows a schematic view of a congress audio system 1 allowing a directional sound function based upon distributed loudspeakers. The congress audio system 1 comprises a plurality of delegate units 2, which are interconnected by a control means embodied as connection means 3. Most of the delegate units 2 comprise a delegate microphone 4 and a delegate loudspeaker 5. Some of the delegate units may only be realized as listener units 6 having only a delegate loudspeaker 5 or as speaker units 7 having only a delegate microphone 4.

The delegate units 2 are integrated in a one-person workplace, for example realized as a lectern, a desktop or a seat for example in a congress hall, auditorium, lecture hall, courtroom or the like. The delegate units 2 are for example arranged in rows and columns or in concentric circles.

In order to realize the directional sound function, the audio signal generated by an active delegate microphone 8 of a specific delegate unit 12 is provided with a time delay in dependence on the distance between the specific delegate unit 12 and the delegate unit 2 with the delegate loudspeaker 5 emitting the audio signal to the listeners. The time delay is in accordance with the acoustic velocity (sound-propagation velocity). As a listener does not only hear his own delegate loudspeaker 5, but also the emitted audio signals of neighboring and/or adjacent delegate loudspeakers 5, which are provided with a different time delay in dependence on their respective distance to the specific delegate unit 12 generating the audio signal, the sound atmosphere of the listener imitates a directional sound resulting from the specific delegate unit 12. As explained before, the human psychoacoustic phenomena of correctly identifying the direction of a sound source heard by both ears but arriving at different times is based on the Haas effect, also called the precedence effect.

Returning to the schematic view of Fig. 1 and assuming that delegate microphone 8 is set as the active delegate microphone and the delegate units 9, 10 and 11 are adjacent to each other but arranged in a ascending distance to the delegate unit 12 or the active delegate microphone 8, a first time delay d1 is added to the audio signal to be emitted by the delegate loudspeaker 5 of the delegate unit 9, a second time delay d2, which is longer than the first delay d1, is added to the audio signal to be emitted by the delegate loudspeaker 5 of the delegate unit 10 and a third time delay d3 is added to the audio signal emitted by the delegate loudspeaker 5 of the delegate unit 11, which is longer than the time delay d2 and the time delay d1. As the listener of the delegate unit 10 also hears the emitted audio signals of the adjacent delegate units 9 and 11 and maybe further delegate units (not shown) he can identify a direction of a virtual sound source, whereby the direction of the virtual sound source is identical to the direction to the active microphone 8.

It shall be underlined that the audio atmosphere of the listener at the delegate unit 10 is generated under participation of the delegate loudspeakers 5 of the delegate units 9, 10 etc. next to the delegate unit 10. Although the sound from the adjacent delegate units 9 and 11 is significantly lower than the sound emitting from the delegate unit 10 it is still possible to recognize the direction of the virtual sound source, respectively the active microphone 8, as the Haas effect is also true even in case the volume of the audio signals arriving at both ears of the listeners is different.

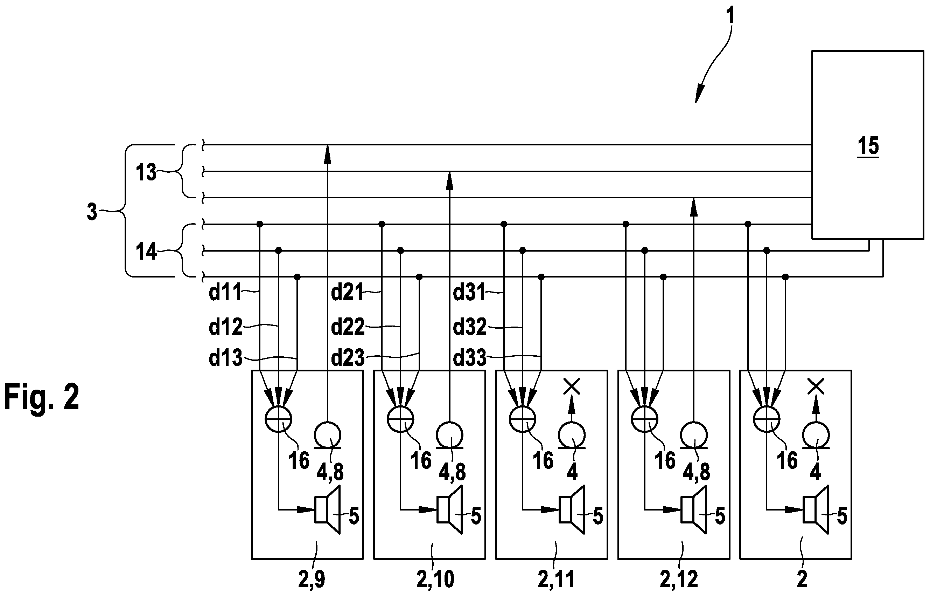

Fig. 2 shows a first possible embodiment of the congress audio system 1 comprising a plurality of the delegate units 2.

In this embodiment the connection means 3 is realized as a plurality of parallel channels, for example wires, whereby each delegate microphone 4 is connected to an individual microphone channel 13 and each delegate loudspeaker 5 is connected to a plurality of loudspeaker channels 14. All microphone channels 13 and all loudspeaker channels 14 are connected with a control unit 15, which allows a central audio processing for example in view of volume and tone control, equalizing, acoustical feedback, suppression and/or scrambling to hide the identity of the speaker (for example used in courtrooms) etc.

In case and as it is shown in Fig. 2 more than one delegate microphone 8 is active, for each active delegate microphone 8 one of the microphone channels 13 is used to transport the audio signals to the control unit 15. The same number of the loudspeaker channels 14 is used to transfer the audio signals from the control unit 15 to the delegate units 2. Each delegate unit 2 is connected to each of the active loudspeaker channels 14 in order to receive the audio signals resulting from the active delegate microphones 8. The delegate unit 2 comprises a delay unit 16, which is operable and/or adapted to add an individual time delay to each of the audio signals. The individual time delay is dependent on the distance between the respective delegate unit 2 and the active microphone 8 of the respective audio signal. So in this case three different time delays d21, d22, and d23 are added to the delegate unit 10. Accordingly, individual time delays d11, d12, d13 and d31, d32, d33 are added to the delegate units 9 and 11, respectively. The length of the time delays d11 to d33 is estimated by the delay unit 16, for example on basis of an encoded position stamp in the audio signals, on basis of the selection of the loudspeaker channel 14, etc. In another embodiment the microphone channels 13 and the loudspeaker channels 14 are realized as an audio data stream channel, whereby the audio signals are digital or analog represented.

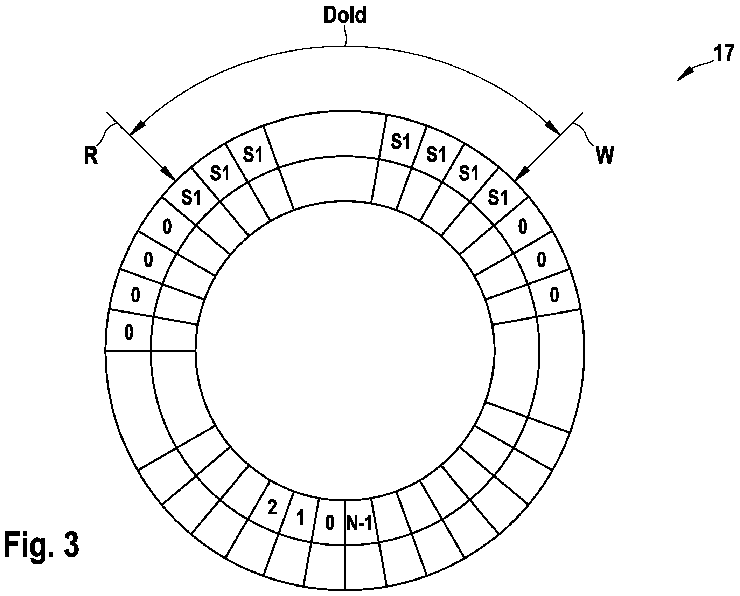

Fig. 3 shows a schematic view of a circular buffer 17, which is employed in the delay unit 16. The circular buffer 17 shows a plurality of memory locations 0...(N-1) arranged in a circular shape. The shape does only represent the architecture of the circular buffer 17, the physical representation may be arranged in another way, for example in rows. A write pointer W and a read pointer R are used to write and read, respectively, samples of the audio input signal in the memory locations. Both pointers W, R are moving in a clockwise direction so that the write pointer W writes samples S1 from the input audio signal to the circular buffer 17 and the read pointer R reads these segments S1 from the circular buffer 17. After each writing or reading step the pointers R, W are moved to the next memory location. Furthermore, after reading a memory location this memory location is set to zero.

The distance between the write pointer W and the read pointer R determines the time delay $d_{old}$ generated by the delay unit 16.

In case the audio input signal source changes, for example a new speaker starts to speak, a changeover from the first audio input signal to the second audio input signal must be performed. Furthermore it is possible that processing the second audio input signal may require another time delay, as the new speaker may be situated at another position as the first speaker.

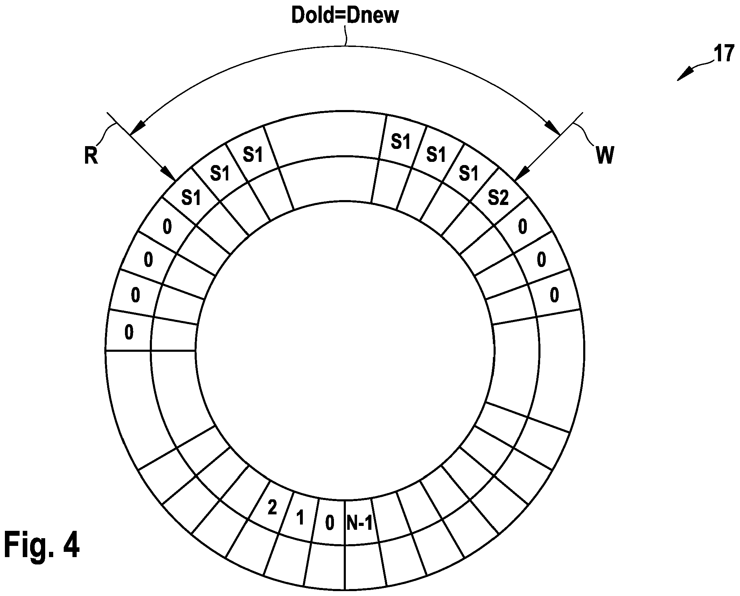

Fig. 4 illustrates the case when the time delay of the first audio input signal $D_{old}$ is the same as the time delay $D_{new}$ of the second audio input signal. In this case the write pointer W finishes writing samples S1 of the first audio input signal and starts to write down samples S2 of the second audio input signal. The changeover will be performed without involving any problems.

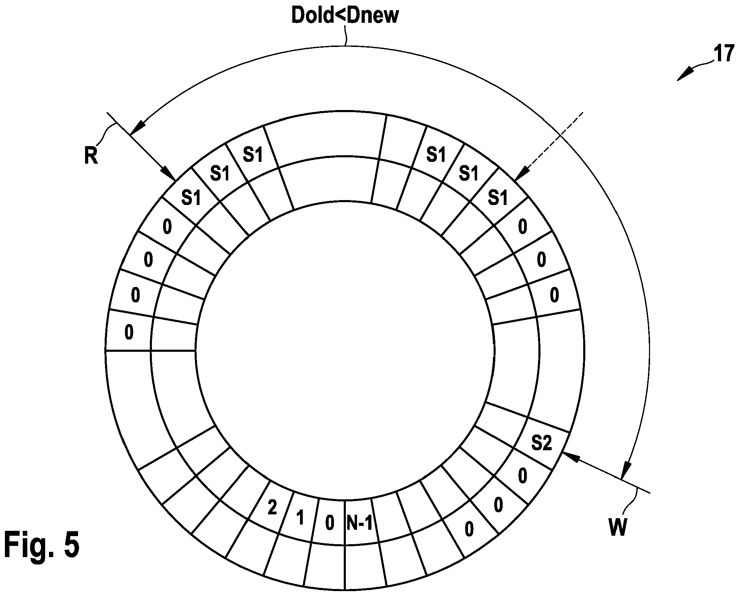

Fig. 5 shows the case, when the time delay of the second audio input signal is longer than the time delay of the first audio input signal. In this case the write pointer W is moved from its old position to a new position, which is determined by the new time delay of the second audio input signal. As the read pointer erases the samples after reading the circular buffer17 is filled with samples S1 of the first input audio signal, then with a plurality of zeros and then with samples S2 of the second audio input signal. In this case the first audio input signal will stop, a short period of silence will follow and then the second audio input signal will start.

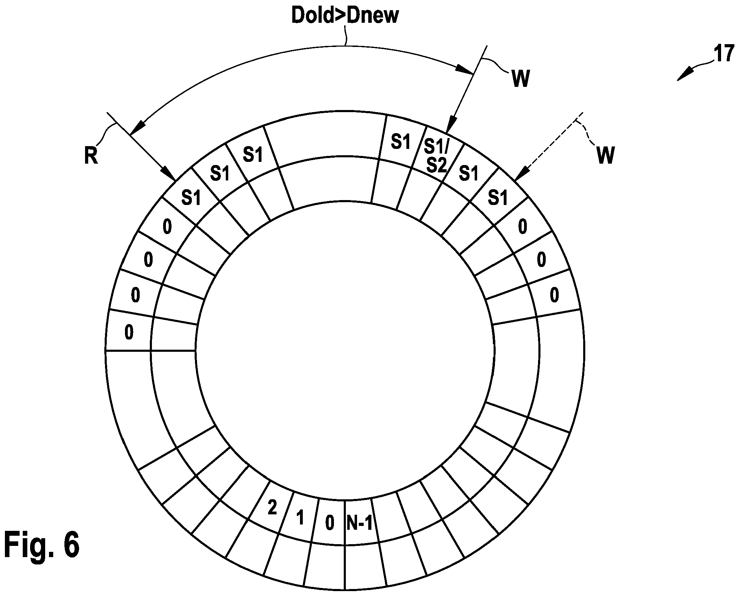

Fig. 6 shows the case when the time delay of the second audio input signal is shorter than the time delay of the first audio input signal. In this case the write pointer W will be moved counter-clockwise and will arrive at a memory location, which is already filled with a sample S1 of the first audio input signal. In this case the delay unit 16 or the write pointer W will write the sample S2 additionally into the memory location, so that both audio input signals will overlap for some time.

In order to improve the changeover between the two audio input signals it is contemplated to fade out or fade in the respective signals by known fading algorithms.

**Claims**

1. Conference audio system (1) comprising
   a plurality of delegate units (2), each delegate unit (2) having a delegate loudspeaker (5) and/or a delegate microphone (4),
   a control means (15) for distributing at least one audio signal from at least one of the delegate microphones (4) or another sound source to a plurality of the delegate loudspeakers (5), the plurality of delegate loudspeakers (5) generating a common audio atmosphere,
   delay means (16) operable to add a time delay on the audio signal,
   whereby
   the delay means comprises a delay unit (16) allocated to a single delegate unit (2) of the conference audio system (1) adapted to delay audio input signals for an adjustable time delay, thereby generating audio output signals,
   the delay unit (16) comprising a circular buffer (17); a write pointer (W) to write a sample (S1) of a first input signal to the circular buffer (17) at a first write position; a read pointer (R) to read a sample from the circular buffer (17) at a first read position as a sample of a first output signal, whereby the distance between the first write position and the first read position determines a first time delay ($d_{old}$); a buffer control module adapted to move the write pointer (W) to a next position after writing and to move the read pointer (R) to a next position after reading; whereby the buffer control module is adapted to adjust a second time delay ($d_{new}$) by moving the write pointer (W) to a second write position, whereby the distance between the first read position and the second write position determines the second time delay ($d_{new}$), whereby the time delay is dependent from the distance between the position of the delegate microphone (4) or sound source, respectively, generating the audio signal and the individual delegate loudspeaker (5) position.

2. Conference audio system (1) according to claim 1, **characterized in that** the buffer control module is adapted to adjust the time delay during a change from the first input audio signal with the first time delay to a second input audio signal with the second time delay.

3. Conference audio system (1) according to claim 1 or 2, **characterized in that** the second write position is determined by the rule:

first read position + second delay time = second write position.

4. Conference audio system (1) according to one of the preceding claims, **characterized in that** the buffer control unit is adapted to zero the memory location of a sample after reading the sample.

5. Conference audio system (1) according to one of the preceding claims, **characterized in that** the buffer control unit is adapted to partly overlap samples of the first signal (S1) and samples of the second sample (S2) in case the second delay ($d_{new}$) is smaller than the first time delay ($d_{old}$).

6. Conference audio system (1) according to one of the preceding claims, **characterized by** a processing unit, which is adapted to fade out the first audio signal and/or to fade in the second audio signal.

7. Method for delaying audio input signals for an adjustable time delay, thereby generating audio output signals, carried out on a conference audio system (1), preferably on the conference audio system (1) according to one of the preceding claims, namely by a delay unit (16), the conference audio system (1) comprising
a plurality of delegate units (2), each delegate unit (2) having a delegate loudspeaker (5) and/or a delegate microphone (4),
a control means (15) for distributing at least one audio signal from at least one of the delegate microphones (4) or another sound source to a plurality of the delegate loudspeakers (5), the plurality of delegate loudspeakers (5) generating a common audio atmosphere,
whereby the delay unit (16) is allocated to a single delegate unit (2) of the conference audio system (1) adapted to delay audio input signals for an adjustable time delay, thereby generating audio output signals,
whereby a sample (S1) of a first audio input signal is written by a write pointer (W) to a circular buffer (17) at a first write position;
whereby a sample of the first audio input signal is read by a read pointer (R) from the circular buffer (17) at a first read position, whereby the distance between the first write position and the first read position determines a first time delay ($d_{old}$);
whereby the write pointer (W) is moved to a next position after writing and the read pointer (R) is moved to next position after reading;
whereby during a change from the first audio input signal with the first time delay ($d_{old}$) to a second audio input signal with a second time delay ($d_{new}$), the write pointer is set to second write position, whereby the distance between the first read position and the second write position determines the second time delay,
whereby the time delay is dependent from the distance between the position of the delegate microphone (4) or sound source, respectively, generating the audio signal and the individual delegate loudspeaker (5) position.

8. Computer program comprising program-code means enabling to carry out the method according to claim 7, when the computer program is carried out on a computer and/or on the on the conference audio system (1) according to one of the claims 1 to 6, namely on the delay unit.

**Patentansprüche**

1. Konferenzaudiosystem (1), umfassend:

eine Vielzahl von Delegierteneinheiten (2), wobei jede Delegierteneinheit (2) einen Delegiertenlautsprecher (5) und/oder ein Delegiertenmikrofon (4) aufweist,
ein Steuermittel (15) zum Verteilen mindestens eines Audiosignals von mindestens einem der Delegiertenmikrofone (4) oder einer anderen Tonquelle an eine Vielzahl der Delegiertenlautsprecher (5), wobei die Vielzahl von Delegiertenlautsprechern (5) eine gemeinsame Audioatmosphäre erzeugt,
ein Verzögerungsmittel (16), das geeignet ist, um eine Zeitverzögerung zu dem Audiosignal hinzuzufügen, wobei
das Verzögerungsmittel eine Verzögerungseinheit (16) umfasst, die einer einzelnen Delegierteneinheit (2) des Konferenzaudiosystems (1) zugeordnet ist, das geeignet ist, um Audioeingangssignale um eine einstellbare Zeitverzögerung zu verzögern, wodurch Audioausgangssignale erzeugt werden,
wobei die Verzögerungseinheit (16) Folgendes umfasst: einen Ringpuffer (17), einen Schreibzeiger (W) zum Schreiben eines Abtastwertes (S1) eines ersten Eingangssignals in den Ringpuffer (17) an einer ersten Schreibposition, einen Lesezeiger (R) zum Lesen eines Abtastwertes aus dem Ringpuffer (17) an einer ersten Leseposition als ein Abtastwert eines ersten Ausgangssignals, wobei der Abstand zwischen der ersten Schreibposition und der ersten Leseposition eine erste Zeitverzögerung ($d_{old}$) bestimmt, ein Puffersteuermodul, das geeignet ist, um den Schreibzeiger (W) nach dem Schreiben an eine nächste Position zu bewegen und um den Lesezeiger (R) nach dem Lesen an eine nächste Position zu bewegen, wobei das Puffersteuermodul geeignet ist, um eine zweite Zeitverzögerung ($d_{new}$) einzustellen, indem der Schreibzeiger (W) an eine zweite Schreibposition bewegt wird, wobei der Abstand zwischen der ersten Leseposition und der zweiten Schreibposition die zweite Zeitverzögerung ($d_{new}$) bestimmt, wobei die Zeitverzögerung von dem Abstand zwischen jeweils der Position des Delegiertenmikrofons (4) bzw. der Tonquelle, das/die das Audiosignal erzeugt, und der Position des individuellen Delegiertenlautsprechers (5) abhängig ist.

2. Konferenzaudiosystem (1) nach Anspruch 1, **dadurch gekennzeichnet, dass** das Puffersteuermodul geeignet ist, um die Zeitverzögerung während eines Wechsels von dem ersten Eingangsaudiosignal mit der ersten Zeitverzögerung zu einem zweiten Eingangsaudiosignal mit der zweiten Zeitverzögerung einzustellen.

3. Konferenzaudiosystem (1) nach Anspruch 1 oder 2, **dadurch gekennzeichnet, dass** die zweite Schreibposition durch die folgende Regel bestimmt wird:

```
erste Schreibposition + zweite Zeitverzögerung = zweite
Schreibposition.
```

4. Konferenzaudiosystem (1) nach einem der vorhergehenden Ansprüche, **dadurch gekennzeichnet, dass** die Puffersteuereinheit geeignet ist, die Speicherposition eines Abtastwertes nach dem Lesen des Abtastwertes auf null zu setzen.

5. Konferenzaudiosystem (1) nach einem der vorhergehenden Ansprüche, **dadurch gekennzeichnet, dass** die Puffersteuereinheit geeignet ist, um Abtastwerte des ersten Signals (S1) und Abtastwerte des zweiten Abtastwertes (S2) im Fall, in dem die zweite Verzögerung ($d_{new}$) kleiner ist als die erste Zeitverzögerung ($d_{old}$), teilweise zu überlappen.

6. Konferenzaudiosystem (1) nach einem der vorhergehenden Ansprüche, **gekennzeichnet durch** eine Verarbeitungseinheit, die geeignet ist, um das erste Audiosignal auszublenden und/oder das zweite Audiosignal einzublenden.

7. Verfahren zum Verzögern von Audioeingangssignalen um eine einstellbare Zeitverzögerung und dadurch Erzeugen von Audioausgangssignalen, das an einem Konferenzaudiosystem (1), vorzugsweise an dem Konferenzaudiosystem (1) nach einem der vorhergehenden Ansprüche, nämlich durch eine Verzögerungseinheit (16), ausgeführt wird, wobei das Konferenzaudiosystem (1) Folgendes umfasst:

eine Vielzahl von Delegierteneinheiten (2), wobei jede Delegierteneinheit (2) einen Delegiertenlautsprecher (5) und/oder ein Delegiertenmikrofon (4) aufweist,
ein Steuermittel (15) zum Verteilen mindestens eines Audiosignals von mindestens einem der Delegiertenmikrofone (4) oder einer anderen Tonquelle an eine Vielzahl der Delegiertenlautsprecher (5), wobei die Vielzahl von Delegiertenlautsprechern (5) eine gemeinsame Audioatmosphäre erzeugt,
wobei die Verzögerungseinheit (16) einer einzelnen Delegierteneinheit (2) des Konferenzaudiosystems (1) zugeordnet ist, das geeignet ist, Audioeingangssignale um eine einstellbare Zeitverzögerung zu verzögern, wodurch Audioausgangssignale erzeugt werden,
wobei ein Abtastwert (S1) eines ersten Audioeingangssignals durch einen Schreibzeiger (W) in einen Ringpuffer (17) an einer ersten Schreibposition geschrieben wird,
wobei ein Abtastwert des ersten Audioeingangssignals durch einen Lesezeiger (R) aus dem Ringpuffer (17) an einer ersten Leseposition gelesen wird, wobei der Abstand zwischen der ersten Schreibposition und der ersten Leseposition eine erste Zeitverzögerung ($d_{old}$) bestimmt,
wobei der Schreibzeiger (W) nach dem Schreiben an eine nächste Position bewegt wird und der Lesezeiger (R) nach dem Lesen an eine nächste Position bewegt wird,
wobei während eines Wechsels von dem ersten Audioeingangssignal mit der ersten Zeitverzögerung ($d_{old}$) zu einem zweiten Audioeingangssignal mit einer zweiten Zeitverzögerung ($d_{new}$) der Schreibzeiger auf eine zweite Schreibposition eingestellt wird, wobei der Abstand zwischen der ersten Leseposition und der zweiten Schreibposition die zweite Zeitverzögerung bestimmt,
wobei die Zeitverzögerung jeweils von dem Abstand zwischen der Position des Delegiertenmikrofons (4) bzw.

der Tonquelle, das/die das Audiosignal erzeugt, und der Position des individuellen Delegiertenlautsprechers (5) abhängig ist.

8. Computerprogramm, das ein Programmcodemittel umfasst, das es ermöglicht, das Verfahren nach Anspruch 7 auszuführen, wenn das Computerprogramm auf einem Computer und/oder auf dem auf dem Konferenzaudiosystem (1) nach einem der Ansprüche 1 bis 6, nämlich auf der Verzögerungseinheit, ausgeführt wird.

**Revendications**

1. Système audio de conférence (1) comprenant :

   une pluralité d'unités de délégué (2), chaque unité de délégué (2) possédant un haut-parleur de délégué (5) et/ou un microphone de délégué (4),
   un moyen de contrôle (15) pour distribuer au moins un signal audio en provenance d'au moins un des microphones de délégué (4) ou d'une autre source sonore vers une pluralité des haut-parleurs de délégué (5), la pluralité de haut-parleurs de délégué (5) générant une atmosphère audio commune,
   un moyen de temporisation (16) apte à opérer de façon à ajouter un retard temporel sur le signal audio, de ce fait
   le moyen de temporisation comprend une unité de temporisation (16) affectée à une unité de délégué individuelle (2) du système audio de conférence (1) conçue pour temporiser des signaux d'entrée audio pour un retard temporel ajustable, permettant ainsi de générer des signaux de sortie audio,
   l'unité de temporisation (16) comprenant une mémoire-tampon circulaire (17) ; un pointeur d'écriture (W) pour écrire un échantillon (S1) d'un premier signal d'entrée vers la mémoire-tampon circulaire (17) à une première position d'écriture ; un pointeur de lecture (R) pour lire un échantillon à partir de la mémoire-tampon circulaire (17) à une première position de lecture à titre d'échantillon d'un premier signal de sortie, de ce fait la distance entre la première position d'écriture et la première position de lecture détermine un premier retard temporel ($d_{old}$) ; un module de contrôle de mémoire-tampon conçu pour déplacer le pointeur d'écriture (W) jusqu'à une prochaine position après avoir effectué l'écriture, et pour déplacer le pointeur de lecture (R) jusqu'à une prochaine position après avoir effectué la lecture ; de ce fait le module de contrôle de mémoire-tampon est conçu pour ajuster un deuxième retard temporel ($d_{new}$) grâce au déplacement du pointeur d'écriture (W) jusqu'à une deuxième position d'écriture, de ce fait la distance entre la première position de lecture et la deuxième position d'écriture détermine le deuxième retard temporel ($d_{new}$), de ce fait le retard temporel est dépendant de la distance entre la position du microphone de délégué (4) ou une source sonore, respectivement, générant le signal audio et la position individuelle du haut-parleur de délégué (5).

2. Système audio de conférence (1) selon la revendication 1, **caractérisé en ce que** le module de contrôle de mémoire-tampon est conçu pour ajuster le retard temporel au cours d'un changement à partir du premier signal d'entrée audio avec le premier retard temporel vers un deuxième signal d'entrée audio avec le deuxième retard temporel

3. Système audio de conférence (1) selon la revendication 1 ou 2, **caractérisé en ce que** la deuxième position d'écriture est déterminée par la règle suivante :

```
première position de lecture + deuxième retard
temporel = deuxième position d'écriture.
```

4. Système audio de conférence (1) selon l'une des revendications précédentes, **caractérisé en ce que** l'unité de contrôle de mémoire-tampon est conçue pour amener à zéro l'emplacement mémoire d'un échantillon après avoir effectué la lecture de l'échantillon.

5. Système audio de conférence (1) selon l'une des revendications précédentes, **caractérisé en ce que** l'unité de contrôle de mémoire-tampon est conçue pour faire chevaucher partiellement des échantillons du premier signal (S1) et des échantillons du deuxième échantillon (S2) au cas où le deuxième retard ($d_{new}$) serait plus petit que le premier retard temporel ($d_{old}$).

6. Système audio de conférence (1) selon l'une des revendications précédentes, **caractérisé par** une unité de traitement, qui est conçue pour faire disparaître en fondu le premier signal audio et/ou pour faire apparaître en fondu le deuxième signal audio.

7. Procédé pour retarder des signaux d'entrée audio pour un retard temporel ajustable, générant ainsi des signaux de sortie audio, réalisé sur un système audio de conférence (1), de préférence sur le système audio de conférence (1) selon l'une des revendications précédentes, notamment par une unité de temporisation (16), le système audio de conférence (1) comprenant :

une pluralité d'unités de délégué (2), chaque unité de délégué (2) possédant un haut-parleur de délégué (5) et/ou un microphone de délégué (4),
un moyen de contrôle (15) pour distribuer au moins un signal audio en provenance d'au moins un des microphones de délégué (4) ou d'une autre source sonore vers une pluralité de haut-parleurs de délégué (5), la pluralité de haut-parleurs de délégué (5) générant une atmosphère audio commune,
de ce fait l'unité de temporisation (16) est affectée à une unité de délégué individuelle (2) du système audio de conférence (1) conçue pour temporiser des signaux d'entrée audio pour un retard temporel ajustable, permettant ainsi de générer des signaux de sortie audio,
de ce fait un échantillon (S1) d'un premier signal d'entrée audio est écrit par un pointeur d'écriture (W) vers une mémoire-tampon circulaire (17) à une première position d'écriture ;
de ce fait un échantillon du premier signal d'entrée audio est lu par un pointeur de lecture (R) à partir de la mémoire-tampon circulaire (17) à une première position de lecture, de ce fait la distance entre la première position d'écriture et la première position de lecture détermine un premier retard temporel ($d_{old}$) ;
de ce fait le pointeur d'écriture (W) est déplacé jusqu'à une prochaine position après avoir effectué l'écriture, et le pointeur de lecture (R) est déplacé jusqu'à une prochaine position après avoir effectué la lecture ;
de ce fait pendant un changement à partir du premier signal d'entrée audio avec le premier retard temporel ($d_{old}$) vers un deuxième signal d'entrée audio avec un deuxième retard temporel ($d_{new}$), le pointeur d'écriture est réglé sur une deuxième position d'écriture, de ce fait la distance entre la première position de lecture et la deuxième position d'écriture détermine le deuxième retard temporel ;
de ce fait le retard temporel est dépendant de la distance entre la position du microphone de délégué (4) ou une source sonore, respectivement, générant le signal audio et la position individuelle du haut-parleur de délégué (5).

8. Programme informatique comprenant un moyen à code-programme permettant de réaliser le procédé selon la revendication 7, lorsque le programme informatique est réalisé sur un ordinateur et/ou sur le sur le système audio de conférence (1) selon l'une des revendications 1 à 6, notamment sur l'unité de temporisation.

Fig. 1

Fig. 2

Fig. 3

EP 2 474 170 B1

EP 2 474 170 B1

Fig. 4

Fig. 5

EP 2 474 170 B1

Fig. 6

EP 2 474 170 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1686835 A1
- US 6275899 B

- EP 1962547 A1